# EUROPEAN PATENT APPLICATION

(11) **EP 1 365 542 A1**
(43) Date of publication of application: **26.11.2003**
(21) Application number: 02011165.4
(22) Date of filing: 21.05.2002
(51) Int. Cl.: H04L 12/413

(54) **Apparatus and method for detection of events through an Ethernet**

(71) Applicant: AEM GAS S.p.a., 20122 Milano, MI (IT)
(72) Inventor: Bartolini, Alessandro, 20098 S. Giuliano Milanese (MI) (IT)
(74) Representative: La Ciura, Salvatore

(57) **Abstract**

Te invention relates to an installation for the detection of gas consumption as claimed in the preceding claim, which includes:
- one or more meters (3) which produce pulses on the basis of the gas consumption of the various premises
- a client interface (1), connected to each meter (3) via wiring (21) and an input device (10) present on the client interface
- means designed to store the data originating from the said meters
- an Ethernet interface that connects the said client interface to the Ethernet network
- a monitoring centre connected to the Ethernet network
- timer devices designed to send the data stored in the said client interface periodically to the said monitoring centre

The method to which this invention relates allows the operating parameters of an appliance to be detected, in particular gas consumption in domestic appliances, and the data to be transmitted periodically to a service centre or monitoring centre using an Ethernet network.

## Description

This invention relates to an apparatus and method for continuous detection of data originating from a plurality of services, and automatic remote transmission of such data through an Ethernet network.

The method to which this invention relates allows the operating parameters of an appliance to be detected, in particular gas consumption in domestic appliances, and the data to be transmitted periodically to a service centre or monitoring centre using an Ethernet network.

### PRIOR ART

Meters have always been read in one of two ways. The classic method is for the meter to be read by an employee of the company that supplies the service; another method is for the meter reading to be communicated by telephone by the customer or by automatic reading apparatus. In this second case, the automatic reading apparatus uses telephone transmission (with a traditional telephone line, GSM or satellite), possibly associated with radio equipment.

This involves the need for a telephone, GS or satellite line, with the related costs, which is not cost-effective for domestic appliances.

Direct reading by an employee of the service provider has a high cost, because the number of readings is particularly high. This drawback can be partly obviated by having the meter read directly by the customer, but this is only a partial remedy, because a direct reading still has to be taken by the provider at least once a year.

Both methods also present the drawback that no information is provided about the consumption trend, which prevents the provider from ascertaining the type of consumption and makes it impossible to manage the supply rationally and above all to invoice the service in accordance with a sliding scale of prices based on the time of use.

These drawbacks are eliminated by the method in accordance with the invention, which involves the use of a local area network and a data collection centre interfaced to a national or regional Ethernet network; the local area network communicates the meter readings and other data of interest via the Ethernet network to the data collection centre in the way described below.

This communication can be performed numerous times a day because, in view of the nature of the data communicated, data transfer to the data collection centre is very cheap, and there is practically no interference with the normal operation of the communication network, which is usually dimensioned to transmit far higher quantities of data.

This method requires the installation at the user's premises of a unit, shown in the annexed figures, constituted by a data concentrator physically connected to all the meters of the individual premises, generally situated in a single room, which interfaces with the Ethernet network.

The device and method to which this invention relates are described in detail below, and the advantages they present compared with the prior art are illustrated by reference to the annexed figures.

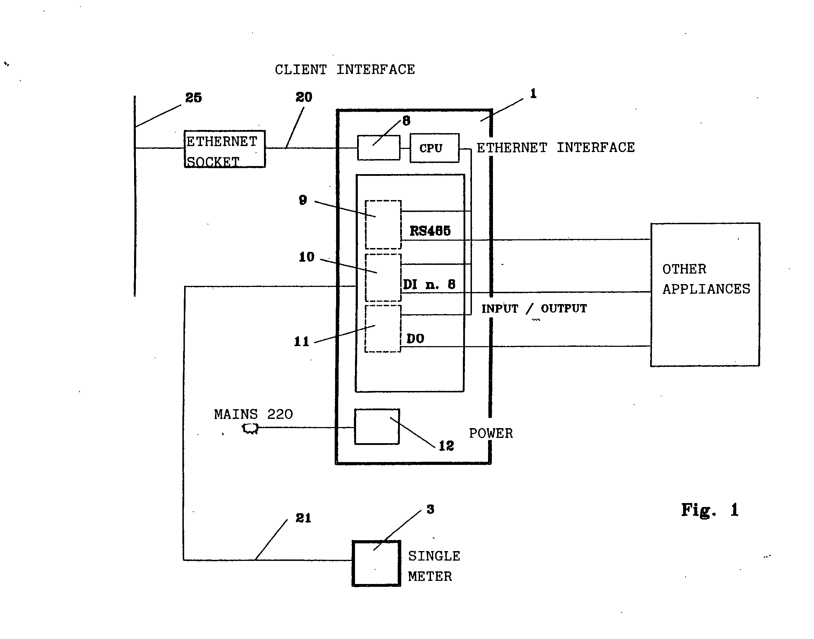

- Figure 1 is a block diagram of an installation present at each user's premises which interfaces with the Ethernet network and is connected via that network to the Intranet of the service provider

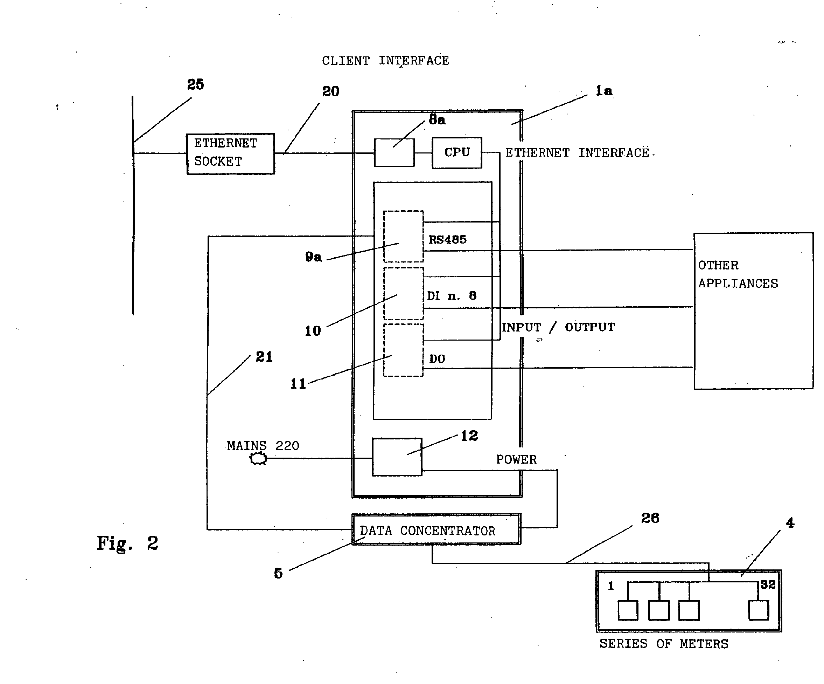

- figure 2 is a block diagram of a similar installation in the case of a series of meters.

### DETAILED DESCRIPTION OF THE INVENTION

A client interface (1) which comprises an interface device (8) connected to the Ethernet network (25) via wiring (20), an RS485 serial communication port (9), a set of digital inputs (10), one of which is connected to meter (3) via wiring (21), and a power pack (12), connected to the mains electricity network, which supplies the energy needed for the operation of the said components (8), (9), (10) and (11), is present at each user's premises.

The basic function of the device described is to continuously detect gas consumption and the associated hourly load curve, and periodically transmit them to the service monitoring centre via the Ethernet network.

Gas consumption is detected by meter (3) which sends pulses proportional to the gas consumption to input device (10) via wiring (21); the said device (10) forwards the data to a CPU with a memory which stores the data and sends it in blocks periodically, for example once an hour, via Ethernet interface (8), wiring (20) and Ethernet network (25), to the monitoring centre of the service provider.

Other similar devices such as a gas leak detector, a CO detector, a fire and smoke monitoring device, a flooding alarm or an anti-intrusion alarm, listed by way of example but not of limitation, could be present at each user's premises.

The said devices could be connected via an RS485 serial port, for example by transmission with the MOD BUS RTU protocol and wiring to the RS485 serial port (9) of client interface (1), or merely by using the available digital inputs and outputs.

In this way, the information originating from the said devices can be transmitted automatically, in accordance with the procedure described, to the service provider, which can take the necessary measures.

Means which monitor the efficiency of the system can advantageously be installed.

For example, the efficiency of the peripherals could be checked periodically by having the monitoring centre send a signal which generates a suitable reply signal from the peripherals, in such a way that failure to receive the said signal by the monitoring centre triggers an alarm signal.

Alternatively, and more simply, an alarm signal could be triggered if the monitoring centre does not receive any communication from one or more peripherals for a given period of time.

If meter (3) is not positioned close to the appliance, as in the case of blocks of flats, where all the meters are grouped together to make reading by the service provider's employee easier, the device to which this invention relates can conveniently be implemented in accordance with the embodiment shown in figure (2).

In accordance with that embodiment, client interface (1) receives the reading data for a set of meters (4) from a data concentrator (5) which groups the meter readings and stores them, then sends them to the client interface (1a) via wiring (27) and serial port RS485 (9a), while the said client interface (1a) sends the consumption information to the service provider via the Ethernet interface (8a), wiring (20a) and Ethernet network (25).

The method described has the following advantages over the known technique:
- it provides information about the customer's gas consumption and how such consumption is distributed over time, thus making it possible to improve management of distribution and introduce customised billing
- it allows other devices present at the user's premises to be monitored so that additional services can be offered to the customer.

The method in accordance with the invention is very useful because it offers considerable savings as no meter reader is required; it enables gas distribution to be optimised and services improved; it provides real-time information about consumption by each customer; it enables studies to be conducted and statistics drawn up, again to improve management of the service; and it means that users are not required to admit strangers to their homes when the meter needs to be read.

An expert in the field could devise various modifications and variations, all of which should be deemed to fall within the scope of this invention.

## Claims

1. Method for detecting gas consumption by one or more appliances, **characterised by** the fact that it involves detection of gas consumption for each appliance and transmission of the data detected to a monitoring centre via an Ethernet network.

2. Method for detecting gas consumption by one or more appliances as claimed in the preceding claim, **characterised by** the fact that the data relating to the consumption measured by each meter (3) is stored in a data base and transmitted automatically to the provider of the service via an Ethernet network at pre-set intervals, such as hourly intervals.

3. Method for detecting gas consumption by individual appliances, **characterised by** the fact that it includes:
• continuous local detection of consumption by each user
• storage of data generated by the said detection
• periodic transmission of the said data to a monitoring centre via an Ethernet network .

4. Method for detecting gas consumption by individual appliances as claimed in the preceding claims, **characterised by** the fact that it includes a stage of checking the efficiency of the peripherals in which the said peripherals send a control signal to the said monitoring centre, at pre-set intervals or on request by the monitoring centre, and the absence of the said control signal triggers an alarm signal.

5. Installation for detection of gas consumption by individual appliances, **characterised by** the fact that it includes:
• one or more meters (3) positioned in the premises, which produce pulses in accordance with the gas consumption and send them to a client interface (1)
• a client interface (1) which receives pulses from the said meters (3) and periodically transmits the said information to the service provider via an Ethernet network

6. Installation for the detection of gas consumption as claimed in the preceding claim, **characterised by** the fact that it includes:
• one or more meters (3) which produce pulses on the basis of the gas consumption of the various premises
• a client interface (1), connected to each meter (3) via wiring (21) and an input device (10) present on the client interface
• means designed to store the data originating from the said meters
• an Ethernet interface that connects the said client interface to the Ethernet network
• a monitoring centre connected to the Ethernet network
• timer devices designed to send the data stored in the said client interface periodically to the said monitoring centre

7. Installation for the detection of gas consumption as claimed in each of claims 5 and 6, **characterised by** the fact that each meter is connected via wiring to the client interface

8. Installation for the detection of gas consumption as claimed in each of claims 5 and 6, **characterised by** the fact that it includes a plurality of meters in series connected to a data concentrator, which said data concentrator is connected to the said client interface.

9. Installation for the detection of gas consumption as claimed in each of claims 5 to 8, **characterised by** the fact that the said wiring consists of twisted pairs
